# EUROPÄISCHE PATENTANMELDUNG

(11) **EP 0 577 181 A1**
(43) Veröffentlichungstag der Anmeldung: **05.01.1994**
(21) Anmeldenummer: 93201780.9
(22) Anmeldetag: 21.06.1993
(51) Int. Cl.: G11B 5/008, G11B 5/02

(54) **Schaltungsanordnung zur Aufzeichnung eines Datensignals**

(30) Priorität: 27.06.1992 DE 4221237
(71) Anmelder: Philips Patentverwaltung GmbH, 22335 Hamburg (DE); Philips Electronics N.V., 5621 BA Eindhoven (NL)
(72) Erfinder: Lützeler, Jörn, Dr., Philips Patentverw. GmbH, D-2000 Hamburg 1 (DE); Pehl, Hermann Josef, Philips Patentverw. GmbH, D-2000 Hamburg 1 (DE)
(74) Vertreter: von Laue, Hanns-Ulrich, Dipl.-Ing.

(57) **Zusammenfassung**

Es wird eine Schaltungsanordnung zur Aufzeichnung von Datensignalen vorgeschlagen, welche die durch einen rotierenden Übertrager in einer rotierenden Abtasteinrichtung verursachten Verzerrungen kompensiert. Dabei wird das von einer Rotorwicklung (3) des rotierenden Übertragers (1) abgegebene Signal über eine Addierstufe (7) einem Eingang einer Schaltstufe (8) zugeführt. Das Ausgangssignal der Schaltstufe (8) wird über ein Tiefpaßfilter (9), dessen Übertragungsverhalten invers zu dem Übertragungsverhalten des rotierenden Übertragers (1) ist, über die Addierstufe (7) auf den Eingang der Schaltstufe (8) zurückgekoppelt. Der Ausgang der Schaltstufe (8, 10) ist mit einem Eingang eines Aufsprechverstärkers (5) verbunden, der den Aufsprechstrom für einen Aufsprech-Magnetkopf (6) liefert.

## Beschreibung

Die Erfindung geht aus von einer Schaltungsanordnung zur Aufzeichnung eines Datensignals für ein Aufzeichnungs/Wiedergabe-Gerät mit rotierender Abtasteinrichtung nach dem Oberbegriff des Patentanspruchs 1.

Das Frequenzspektrum eines rechteckförmig verlaufenden Datensignals weist Spektralanteile auf, die sich bis ins Unendliche erstrecken. Um ein Datensignal unverzerrt zu übertragen, wird daher ein Übertragungskanal mit unendlicher Bandbreite benötigt. Ein Übertragungskanal mit induktiver Kopplung verfügt jedoch nicht über eine derartige Bandbreite. So weist beispielsweise der Übertragungskanal einer rotierenden Abtasteinrichtung für Videomagnetbandgeräte lediglich einen Bandpaßcharakter auf, wobei eine obere und untere Grenzfrequenz wesentlich von dem Übertragungsverhalten eines rotierenden Übertragers abhängt.

Aus der US-PS 4,561,027 ist bereits eine Schaltungsanordnung für ein magnetisches Aufzeichnungs/Wiedergabe-Gerät bekannt, bei der nicht das Datensignal selbst sondern eine von dem Datensignal abgetrennte Flankeninformation von der Primärwicklung (Statorwicklung) zu der Sekundärwicklung (Rotorwicklung) eines rotierenden Übertragers übertragen wird. Diese Flankeninformation weist einen Mittelwert auf, der sich im wesentlichen nicht mit den Gleichspannungsanteil des Datensignals ändert. Der rotierende Übertrager kann somit die Flankeninformation gleichspannungsfrei übertragen. Auf der Rotorseite muß aus der empfangenen Flankeninformation das ursprüngliche Datensignal wieder zurückgewonnen werden. Dies geschieht mit zwei Schwellwertschaltungen, die auf positive und negative Flanken der empfangenen Flankeninformation ansprechen und ein RS-Flipflop ansteuern. Parallel zu der Flankeninformatino wird über einen weiteren rotierenden Übertrager ein Taktsignal übertragen. Dieses Taktsignal dient dazu, mit Hilfe eines D-Flipflops das an einem Ausgang des RS-Flipflops zurückerhaltene Datensignal in das richtige Zeitraster zu stellen, bevor es einem Aufsprechverstärker zugeführt werden kann. Aufgrund des erheblichen Schaltungsaufwands kann diese bekannte Schaltungsanordnung in einer rotierenden Abtasteinrichtung, die zur mehrkanaligen Aufzeichnung von Datensignalen eingerichtet ist, aus Platzgründen nicht eingesetzt werden. Ein weiterer Nachteil ist, daß die auf der wärmeempfindlichen Rotorseite anzuordnenden Schaltungsteile erhebliche Leistung aufnehmen, von der ein Teil als Verlustleistung abgestrahlt wird.

Eine weniger aufwendige Schaltungsanordnung ist aus der DE 30 45 544 A1 bekannt. Bei dieser bekannten Schaltungsanordnung liegt in dem Signalweg zwischen der Rotorwicklung und dem Eingang eines Aufsprechverstärkers eine Klemmschaltung, welche die durch den Hochpaßcharakter des rotierenden Übertragers verursachte Basislinienverschiebung eines gleichspannungshaltigen Datensignals teilweise reduziert. Die durch die induktive Übertragung verlorengegangenen niederfrequenten Signalanteile werden nicht kompensiert.

Der vorliegenden Erfindung liegt daher die Aufgabe zugrunde, eine Schaltungsanordnung zur Aufzeichnung von Datensignalen nach der eingangs genannten Art anzugeben, welche die durch den rotierenden Übertrager bedingten Verzerrungen kompensiert.

Diese Aufgabe wird durch die im kennzeichnenden Teil des Patentanspruch 1 angegebenen Merkmale gelöst.

Die erfindungsgemäße Schaltungsanordnung mit den kennzeichnenden Merkmalen des Patentanspruchs 1 hat den Vorteil, daß das aufzuzeichnende Datensignal nicht an das Übertragungsverhalten des rotierenden Übertragers angepaßt werden muß. Auf der Rotorseite des rotierenden Übertragers können einfache und wenig platzaufwendige Schaltungen eingesetzt werden, die zudem nur wenig Leistung aufnehmen. Ein weiterer Vorteil ist, daß das aufgezeichnete Datensignal hinsichtlich seiner Kodierung nicht verändert und ein bestehender Aufzeichnungsstandard nicht verletzt wird.

Durch die in den Unteransprüchen aufgeführten Maßnahmen sind vorteilhafte Weiterbildungen und Verbesserungen der im Patentanspruch 1 angegebenen Schaltungsanordnung möglich.

Ein Ausführungsbeispiel der Erfindung ist in der Zeichnung dargestellt und in der nachfolgenden Beschreibung näher erläutert. Es zeigen:
- Fig. 1: ein Blockschaltbild einer ersten Ausführungsform gemäß der Erfindung,
- Fig. 2: ein Blockschaltbild einer zweiten Ausführungsform gemäß der Erfindung und
- Fig. 3: ein Blockschaltbild einer dritten Ausführungsform gemäß der Erfindung.

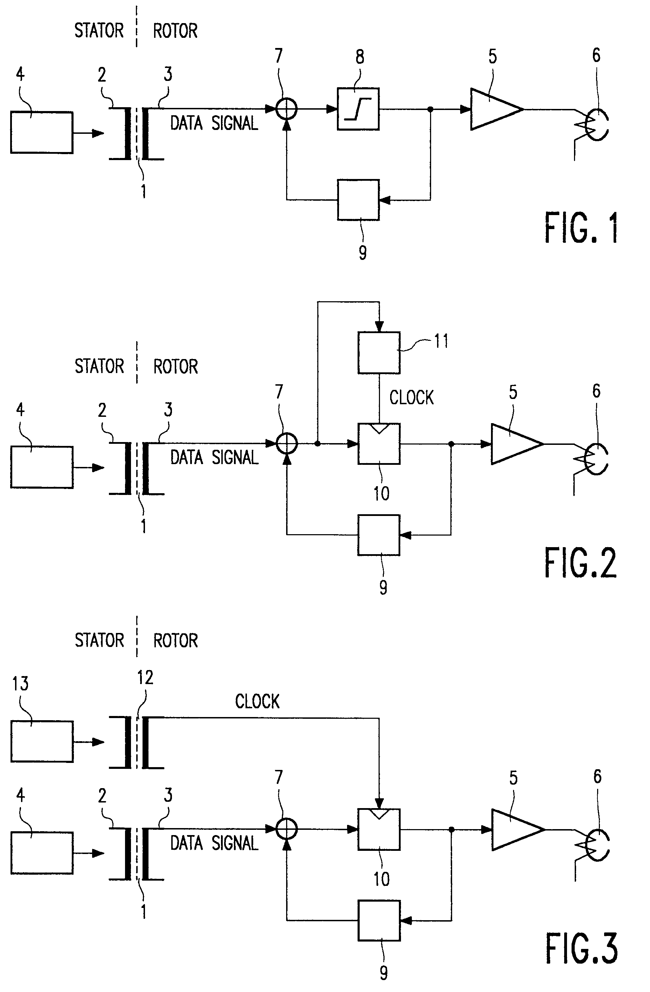

In der Fig. 1 bezeichnet 1 einen induktiven Übertrager mit einer Statorwicklung 2 und einer Rotorwicklung 3. Der rotierende Übertrager 1 ist Teil einer (nicht dargestellten) rotierenden Abtasteinrichtung, die von einem Magnetband wendelförmig umschlungen ist. Das Magnetband wird mit Magnetköpfen abgetastet, die am Umfang eines Drehkörpers der rotierenden Abtasteinrichtung befestigt sind.

Zur Aufzeichnung eines Datensignals wird das in einer Datenquelle 4 erzeugte Datensignal von der feststehenden Statorwicklung 2 zu der Rotorwicklung 3 übertragen, die ebenso wie ein Aufsprechverstärker 5 und ein zugeordneter Aufsprech-Magnetkopf 6 auf dem Drehkörper befestigt ist und mit dem Drehkörper umläuft.

Wie bereits dargelegt, wird das Frequenzspektrum des aufzuzeichnenden Datensignals durch den Bandpaßcharakter des induktiven Übertragers 1 begrenzt. Die Beschneidung der niederfrequenten Signalanteile im aufzuzeichnenden Datensignal wirkt sich dabei besonders störend aus. Durch den nicht-linearen Charakter des Schreibprozesses bedingt, können Datensignale mit ausgeprägten Gleichspannungs- bzw. Niederfrequenz-Anteilen nur fehlerhaft von einem Magnetband wieder abgenommen werden.

Zur Kompensation der durch den rotierenden Übertrager 1 verursachten Signalverzerrungen des aufzuzeichnenden Datensignals wird das an Wicklungsenden der Rotorwicklung 3 abgegebene Signal über eine Addierstufe 7 dem Eingang eines Begrenzers 8 zugeführt. Das am Ausgang des Begrenzers 8 liegende Signal wird über ein Filter 9 und den Addierer 7 wieder auf den Eingang des Begrenzers 8 zurückgekoppelt. Der Frequenzgang des Filters 9 entspricht dem inversen Frequenzgang des rotierenden Übertragers 1. Näherungsweise kann hier ein Tiefpaß erster Ordnung eingesetzt werden, dessen Eckfrequenz der unteren Grenzfrequenz des rotierenden Übertragers 1 entspricht. Im Fall, daß die untere Grenzfrequenz des rotierenden Übertragers 1 200 kHz beträgt, sollte die Eckfrequenz die Tiefpaßfilters ebenfalls 200 kHz betragen. Am Ausgang des Begrenzers 8 ist ein Datensignal abnehmbar, in welchem der durch den rotierenden Übertrager 1 verlorengegangene Gleichspannungsanteil kompensiert und die unterhalb von 200 kHz liegenden Frequenzanteile wieder zurückgewonnen sind. Das Ausgangssignal des Begrenzers 8 wird zu dem Aufsprechverstärker 5 weitergeleitet, welcher den zur Ansteuerung des Aufsprech-Magnetkopfes 6 erforderlichen Strom liefert.

Die aus den Stufen 7, 8 und 9 gebildete Kompensationsschaltung ist an sich bekannt (IEEE Transactions on Communications, Vol. COM 22, NO. 1, January 1974, Seiten 1 bis 5). Die auch als quantisierte Rückkopplung bekannte Kompensationsschaltung wurde bisher auf der Empfängerseite einer leitungsgebundenen Übertragungsstrecke eingesetzt, um die durch Übertragungsverluste verursachten Verzerrungen im empfangenen Datensignal zu beseitigen. Versuche haben gezeigt, daß durch den Einsatz einer quantisierten Rückkopplungsschaltung auf der Rotorseite einer Abtasteinrichtung die Fehlerrate gesenkt werden kann. Durch den nicht-linearen Charakter des magnetischen Aufzeichnungsprozesses kann auf der Empfängerseite der Gleichspannungs- und Niederfrequenzanteil jedoch nur unvollkommen zurückgebildet werden.

Eine Weiterbildung der in der Fig. 1 eingesetzten quantisierten Rückkopplung zeigt die Fig. 2. Gleiche Teile sind in den Figuren mit gleichen Bezugszeichen versehen. Anstelle eines Begrenzers ist in dem Blockschaltbild der Fig. 2 ein Flipflop 10 zwischen dem Ausgang des Addierers 7 und dem Eingang des Aufsprechverstärkers 5 eingefügt. Ein zur Taktung des Flipflops 10 erforderlicher Takt wird in einer Taktzurückgewinnungsschaltung 11 aus dem am Ausgang des Addierers 7 liegenden Datensignal erzeugt. Auch in diesem Fall ist das als Tiefpaßfilter ausgelegte Filter 9 so zu dimensionieren, daß seine Eckfrequenz mit der unteren Grenzfrequenz des rotierenden Übertragers 1 übereinstimmt. Gegenüber der in der Fig. 1 dargestellten Kompensationsschaltung weist die Kompensationsschaltung der Fig. 2 den Vorteil auf, daß das Flankenjittern im übertragenen Datensignal verringert werden kann. Dieser Vorteil wird allerdings durch den Nachteil erkauft, daß die als Entscheidungsrückkopplung bezeichneten Kompensationsschaltung zusätzlichen Platz benötigt und die Taktwiedergewinnungsschaltung 11 zusätzlich Leistung aufnimmt.

Bei dem in der Fig. 3 dargestellten Blockschaltbild wird der Takt nicht in einer auf dem Drehkörper angeordneten Taktrückgewinnungsschaltung 11 erzeugt, sondern über einen weiteren rotierenden Übertrager 12, der von einer außerhalb der rotierenden Abtasteinrichtung angeordneten Taktsignalquelle 13 angesteuert wird. Da zur Aufzeichnung von Datensignalen hoher Datenrate mehrere Aufsprechkanäle und damit eine entsprechende Anzahl von rotierenden Übertragern benötigt werden, muß das Taktsignal nur ein einziges Mal übertragen werden; es kann dann auf die anderen Kanäle des Drehkörpers verteilt werden.

Nach einer weiteren Ausgestaltung der Erfindung kann das dem Aufsprechverstärker 5 zuzuleitende Datensignal auch bereits nach der Addierstufe ausgekoppelt werden. Dies ist besonders vorteilhaft, wenn das aufzusprechende Signal nicht rechteckförmig ist, z.B. bei der Verwendung einer Vorentzerrung zur Reduzierung von Spitzenversatzverzerrungen (peak-shift) im wiedergegebenen Datensignal.

## Patentansprüche

1. Schaltungsanordnung zur Aufzeichnung eines Datensignals für ein Aufzeichnungs-/Wiedergabegerät mit rotierender Abtasteinrichtung, welche einen rotierenden Übertrager zur Übertragung der aufzuzeichnenden Datensignale enthält, wobei das aufzuzeichnende Datensignal einer Statorwicklung des rotierenden Übertragers zugeführt wird, wobei eine Rotorwicklung des rotierenden Übertragers drehfest mit einem Drehkörper verbunden ist, welcher am Umfang einen Magnetkopf zum Abtasten des Magnetbandes aufweist und welcher einen Aufsprechverstärker trägt, der in einen Signalweg von der Rotorwicklung zum Magnetkopf eingefügt ist,
dadurch gekennzeichnet, daß jeweils zwischen der Rotorwicklung (3) des rotierenden Übertragers (1) und einem Eingang des Aufsprechverstärkers (5) eine Kompensationseinrichtung (7 bis 11) angeordnet ist, mit
- einer Addierstufe (7) mit zwei Eingängen und einem Ausgang, wobei einem der Eingänge ein von der Rotorwicklung (3) abgegebenes Signal zugeführt ist,
- einer Schaltstufe (8, 10), deren Eingang mit dem Ausgang der Addierstufe (7) verbunden ist, und
- einer Filtereinrichtung (9) mit einem Übertragungsverhalten, welches im wesentlichen invers zu dem Übertragungsverhalten des rotierenden Übertragers (1) ist, bei welcher ein Eingang mit dem Ausgang der Schaltstufe (8, 10) verbunden ist und bei welcher ein Ausgang an einem anderen Eingang der Addierstufe (7) angeschlossen ist.

2. Schaltungsanordnung nach Anspruch 1,
dadurch gekennzeichnet, daß die Schaltstufe (8, 10) aus einem Begrenzer (8) besteht.

3. Schaltungsanordnung nach Anspruch 1, dadurch gekennzeichnet, daß die Schaltstufe (8, 10) aus einem D-Flipflop (10) besteht, wobei einem Dateneingang des D-Flipflops (10) ein von der Addierstufe (7) abgegebenes Signal und einem Takteingang des D-Flipflops (10) ein Taktsignal zugeführt ist.

4. Schaltungsanordnung nach Anspruch 3, dadurch gekennzeichnet, daß das Taktsignal in einer Taktrückgewinnungseinrichtung (11) von dem übertragenen Datensignal abgeleitet ist.

5. Schaltungsanordnung nach Anspruch 3, gekennzeichnet durch einen weiteren rotierenden Übertrager (12) zur Übertragung des Taktsignals parallel zu dem Datensignal.

6. Schaltungsanordnung nach Anspruch 1, dadurch gekennzeichnet, daß ein Eingang des Aufsprechverstärkers (5) mit einem Ausgang der Schaltstufe (8, 10) verbunden ist.

7. Schaltungsanordnung nach Anspruch 1, dadurch gekennzeichnet, daß ein Eingang des Aufsprechverstärkers (5) mit einem Ausgang der Addierstufe (7) verbunden ist.
